# EUROPÄISCHE PATENTSCHRIFT

(11) **EP 3 246 191 B1**
(45) Veröffentlichungstag und Bekanntmachung des Hinweises auf die Patenterteilung: **07.08.2019**
(21) Anmeldenummer: 16405007.2
(22) Anmeldetag: 18.05.2016
(51) Int. Cl.: B60K 17/10, A01B 33/02, B60K 17/28

(54) **SELBSTFAHRENDE, VORZUGSWEISE EINACHSIGE, MANUELL LENK- UND STEUERBARE ARBEITSMASCHINE FÜR DAS FORTBEWEGEN UND BETREIBEN ANGEBAUTER ARBEITSGERÄTE**
SELF-PROPELLED, PREFERABLY ONE-AXLE, MANUALLY STEERABLE AND CONTROLLABLE WORKING MACHINE FOR DISPLACING AND OPERATING ATTACHED WORK TOOLS
MACHINE DE TRAVAIL AUTOMOTRICE, DE PREFERENCE A UN SEUL ESSIEU, POUR LE DEPLACEMENT ET L'ENTRAINEMENT D'APPAREILS DE TRAVAIL MONTES

(43) Veröffentlichungstag der Anmeldung: 22.11.2017
(73) Patentinhaber: Rapid Technic AG, 8956 Killwangen (CH)
(72) Erfinder: Häfeli, Christian, CH-6332 Hagendorn (CH)
(74) Vertreter: Fenner, Werner

(56) Entgegenhaltungen:
- EP-A1- 2 184 199
- EP-A1- 2 491 777
- CH-A5- 696 511
- DE-B- 1 031 144
- DE-B- 1 135 305
- DE-B- 1 288 453
- JP-A- H 061 155

## Beschreibung

Die Erfindung betrifft eine selbstfahrende, vorzugsweise einachsige, manuell lenk- und steuerbare Arbeitsmaschine für das Fortbewegen und Betreiben angebauter Arbeitsgeräte oder angehängter Fahrzeuge, mit einem auf einem Fahrgestell aufgebauten Antriebsmotor, der mit einer zur Fortbewegung der Arbeitsmaschine bestimmten hydrostatischen Antriebseinheit verbunden ist, die wenigstens eine mit dem Antriebsmotor kuppelbare und steuerbare Hydraulikpumpe und mit dieser leitungsverbundene, an einer quer zur Fortbewegungsrichtung sich erstreckenden Fahrachse jeweils endseitig befestigten Rädern zugeordnete Hydraulikmotoren aufweist, und der zum Antrieb eines an dem Fahrgestell frontseitig angebauten Arbeitsgerätes mit einer zu- und ausschaltbaren Arbeitswelle ausgebildet ist.
Üblicherweise befindet sich eine Kupplung im Arbeitsstrang einer Arbeitsmaschine der eingangs genannten Art, die über eine Totmanntaste oder einen Kupplungshebel betätigt wird, wodurch bei einer Betätigung sowohl der Fahrantrieb wie auch die Arbeits-/Zapfwelle für den Geräteantrieb gemeinsam angehalten/unterbrochen wird.

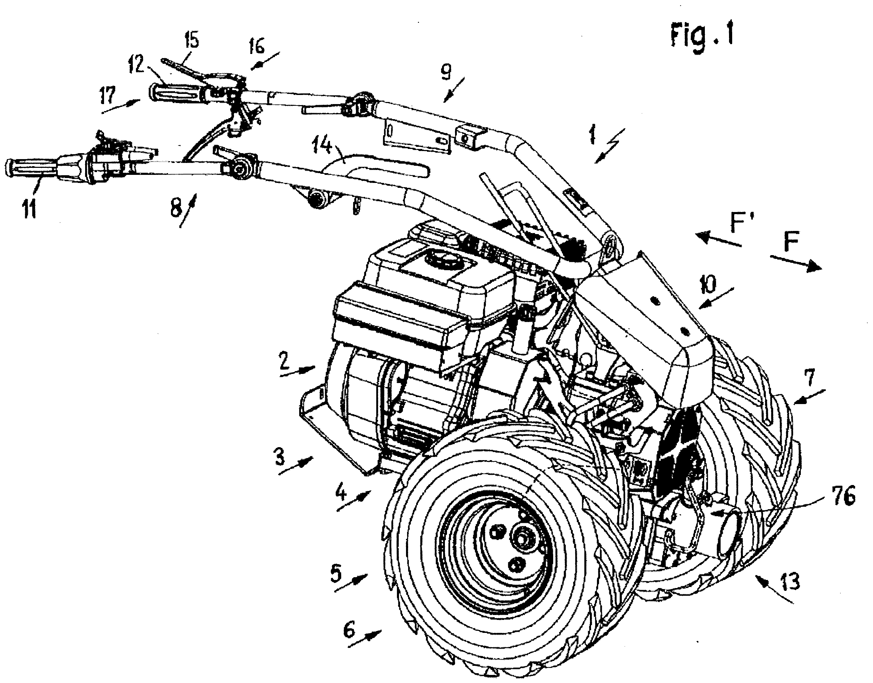

Die vorveröffentlichte EP 2 184 199 A1 offenbart eine Arbeitsmaschine der eingangs beschriebenen Art mit verschiedenen Antriebsvorrichtungen zur Fortbewegung und zum Antrieb der Arbeits-/Zapfwelle. Bei einer Ausführung nach Fig. 1 ist der Antriebsmotor durch die Motorwelle über eine Zwischenwelle mit einer Hydraulikpumpe zum Antrieb der Räder der Fahrachse fest verbunden und die Arbeits-/Zapfwelle ist mittels Riemenantrieb durch eine zuschaltbare Elektrokupplung sowie eine als Riemenrad ausgebildete, auf der Zwischenwelle verschiebbar gelagerte Antriebsmuffe angetrieben.
Bei einer alternativen Ausführung nach Fig. 2 ist anstelle eines Zugmittelgetriebes ein einstufiges Zahnradgetriebe vorgesehen, wobei das treibende Zahnrad an der als Hohlwelle ausgebildeten Antriebsmuffe befestigt ist. Dagegen sind gemäss den Fig. 3 und 5 die Zapfwellenantriebe zweistufig ausgebildet.
Bei diesen Arbeitsmaschinen ist die Hydraulikpumpe zum Antrieb der Räder mit dem brennstoffbetriebenen Antriebsmotor antriebsverbunden und die konstante oder unterschiedliche Drehzahl der Räder ist über eine Lenkventilanordnung gesteuert. Der Zapfwellenantrieb erfolgt mittels einer auf der den Antriebsmotor und die Hydraulikpumpe verbindenden Zwischenwelle, auf der eine Schaltkupplung angeordnet ist. Diese Schaltkupplung ist dem Getriebe zugeordnet, das mit der Arbeits- oder Zapfwelle verbunden ist. Die Schaltkupplung kann elektromagnetisch oder reibschlüssig betätigt ausgebildet sein und besteht -wie dargestellt- aus einem stationären Kupplungsgehäuse, an dem ein ein- und ausschaltbarer Elektromagnet befestigt ist. Weiterhin besteht die Schaltkupplung aus einem an der Zwischenwelle befestigten Kupplungsrotor und einer hinsichtlich Elektromagnet hinter dem Kupplungsrotor angeordneten Ankerscheibe, die bei eingeschaltetem Elektromagnet angetrieben wird. Die Arretierung des Kupplungsrotors an der Zwischenwelle ist formschlüssig. Die Ankerscheibe ist mit einer auf der Zwischenwelle gelagerten Antriebsmuffe verbunden, die einem Antriebsrad des zum Antrieb der Zapfwelle vorgesehenen Vorgeleges dient.
Bei einer gattungsgleichen Arbeitsmaschine nach der CH 696 511 A5 werden die Hydraulikmotoren für den Antrieb der Räder der Arbeitsmaschine und die Arbeitswelle für den Antrieb der Arbeitsgeräte über eine mit der Antriebswelle des Antriebsmotors zuschaltbare Kupplung und eine gemeinsame Antriebswelle angetrieben, wobei die Lenkung der Arbeitsmaschine im Wesentlichen durch die Änderung der Drehzahl der Räder über eine Ventilsteueranordnung erfolgt.
Auf der Motorwelle ist ein Kupplungsteil einer Reibungskupplung befestigt, wogegen der dem Fahr- und Arbeitsgeräteantrieb zugeordnete Kupplungsteil auf einer Hauptwelle eines Getriebes axial verschiebbar sitzt. Der bewegliche Kupplungsteil ist mit einer kegelstumpfförmigen Reibfläche ausgebildet, an der ein Reibbelag befestigt ist. Durch einen Schalthebel kann der bewegliche Kupplungsteil durch Reibungsschluss mit dem an der Antriebswelle des Antriebsmotors befestigten weiteren Kupplungsteil in Verbindung gebracht und aus der Verbindung wiederum gelöst werden. Zwischen den Lagerstellen der Hauptwelle ist an dieser ein Zahnrad befestigt, welches mit einem Antriebsritzel des Hydraulikpumpenantriebs einerseits und einem Antriebsrad der Zapfwelle kämmt. Bei dieser Ausführung sind die Hydraulikpumpe für die Räder und der Zapfwellenantrieb vereint antriebsverbunden und können nur durch eine Kupplung von der Antriebswelle des Motors gemeinsam getrennt werden.

Unter einem Antriebsstrang eines Fahrzeuges, auch bei einer selbstfahrenden Arbeitsmaschine wie vorliegend beschrieben, werden in der Kraftfahrzeugtechnik alle Komponenten verstanden, die im Fahrzeug die Leistung für den Antrieb erbringen. Beim konventionellen Antriebsstrang, bei dem ein Verbrennungsmotor (Otto- oder Dieselmotor) eingesetzt ist, zählen dazu der Motor, die Kupplungen mit den Fahrzeug- und den Gerätegetrieben, die Antriebswellen sowie die Räder.

Es hat sich an die vorliegende Erfindung die Aufgabe gestellt, eine einen geringeren Raumbedarf beanspruchende, einfache Bauweise für die den Antriebsstrang bildenden Antriebskomponenten zu schaffen und den Bedienungskomfort und die damit verbundene Arbeitssicherheit im Umgang mit der Arbeitsmaschine, auch zeitsparend, zu verbessern.

Erfindungsgemäss wurde die Aufgabe dadurch gelöst, dass der in **einem** den Antriebsmotor, die hydrostatische Antriebseinheit und die Arbeitswelle **durch eine** Antriebswelle verbindenden Antriebsstrang angeordneten, wenigstens einen Hydraulikpumpe **der hydrostatischen Antriebseinheit** und der Arbeitswelle jeweils eine von der anderen unabhängig ein- und ausschaltbare Kupplung vorgeschaltet ist.

Die Lösung gestattet, den Fahrantrieb und die Arbeits-/Zapfwelle mittels Fernsteuerung unabhängig voneinander zu betätigen.

Damit ist die Möglichkeit gegeben, das angebaute Arbeitsgerät während der Fortbewegung der Arbeitsmaschine ein- und auszuschalten.

Vorteilhaft ist der Antriebsstrang durch eine Antriebswelle ausgebildet, an der die Hydraulikpumpe zwischen den vorgeschalteten, vorzugsweise elektromagnetisch betätigten Kupplungen angeordnet ist.

Dies ist auch der Fall bei zwei an der Antriebswelle angeordneten Hydraulikpumpen, die jeweils einem Rad der Arbeitsmaschine zugeordnet sind. Eine solche Ausführungsform gestattet eine Bauform des Antriebsstrangs.

Selbstverständlich könnten auch mechanisch betätigte Reib- oder formschlüssig wirkende Kupplungen anstelle von elektromagnetisch funktionierenden Kupplungen verwendet werden.

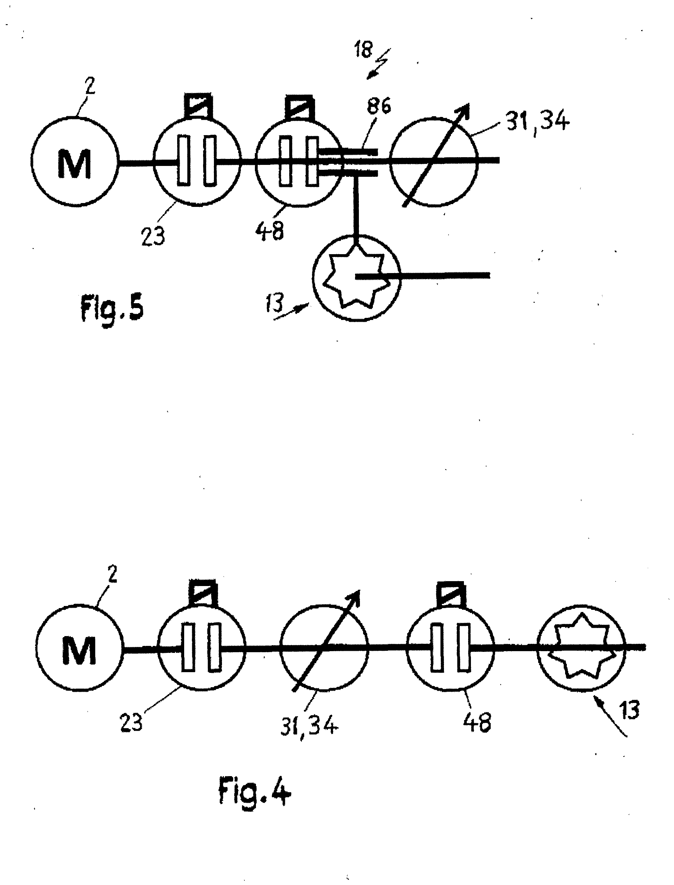

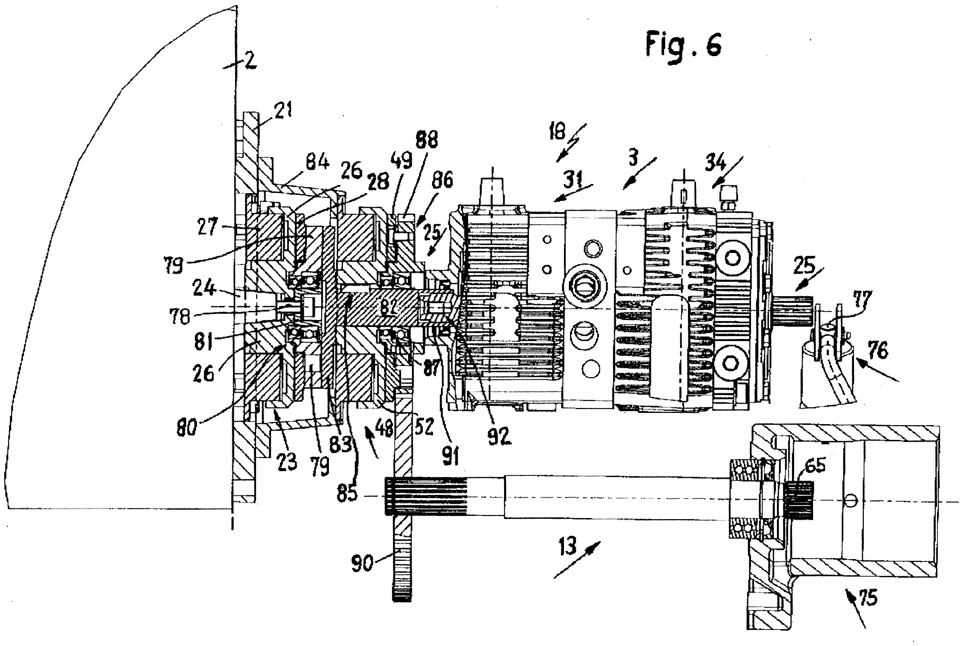

Eine alternative Ausführung des Antriebsstrangs (Fig. 5 und 6) entsteht, wenn die für die hydrostatische Antriebseinheit und die Arbeitswelle bestimmten Kupplungen vor der Hydraulikpumpe an der Antriebswelle angeordnet sind, die gegenüber dem Stand der Technik vorteilhaft sind.

Vorzugsweise ist zur Minderung der Drehzahl der Arbeitswelle zugeordneten Kupplung jeweils ein Vorgelege nachgeschaltet, beispielsweise ein Zahnradvorgelege oder ein Zugmittelgetriebe.

Es erweist sich als einfache Bauform, wenn das Vorgelege durch ein treibendes Zahnrad und ein angetriebenes Zahnrad ausgebildet ist, wobei das treibende Zahnrad des Vorgeleges als Hohlwelle an der Antriebswelle gelagert und mit der Ankerplatte der der Arbeitswelle zugeordneten Kupplung antriebsverbunden ist.

Als geeignet erweist es sich, wenn die für die Arbeitswelle bestimmte Kupplung zwischen der für die hydrostatische Antriebseinheit vorgesehenen Kupplung und der/den Hydraulikpumpe/n an der Antriebswelle angeordnet ist bzw. dass die Kupplung der Arbeitswelle entlang der Antriebswelle hinter der Kupplung der hydrostatischen Antriebseinheit angeordnet ist, sodass eine kompakte Anordnung des Antriebsstrangs entstehen kann.

Der Einfachheit halber weist die hydrostatische Antriebseinheit jeweils jedem Rad zugeordnete Hydraulikpumpen auf, die mit jeweils einem Hydraulikmotor eines Rades leitungsverbunden sind, sodass das Steuersystem wartungsfreundlich und übersichtlich wird.

Besonders unterhaltsfreundlich ist die Arbeitsmaschine, wenn der Antriebsmotor an einer mit dem Fahrgestell verbundenen Befestigungsplatte angeschraubt ist und die Motorwelle durch die Kupplung mit einer im Maschinengehäuse gelagerten Antriebswelle des Antriebsstrangs verbunden ist.

Es ist einfach, wenn die entlang der Antriebswelle angeordneten Hydraulikpumpen der hydrostatischen Antriebseinheit und die Kupplung der Arbeitswelle durch Keilwellenverbindungen mit der Antriebswelle antriebsverbunden sind, sodass ein relativ geringer Konstruktionsaufwand entsteht.

Vorteilhaft ist es, wenn das vom Antriebsmotor abgewandte Ende der Antriebswelle an einem in dem Maschinengehäuse angeordneten Lagerschild gelagert ist, was die Montier- und Demontierbarkeit der Einzelteile und Komponenten erleichtert.

Die Ausbildung der Lagerung der Antriebswelle an dem vom Antriebmotor abgewandten Ende erfordert eine hohe Präzision, die dadurch erreicht wird, indem eine mit der Ankerplatte der Kupplung verbundene Nabe einen konzentrischen Lagerhals aufweist, auf dem der mit einem Zahnritzel des Vorgeleges der Arbeitswelle verbundene Kupplungsrotor gelagert ist.

Die Zugänglichkeit zu den Maschinenelementen und Aggregaten im Maschinengehäuse kann dadurch verbessert werden, indem der Lagerschild in einem an dem Maschinengehäuse abnehmbar befestigten Gehäuseteil angebracht ist.

Die alternative Ausführung mit den nebeneinander an der Antriebswelle angeordneten Kupplungen lässt sich dadurch optimieren, wenn die Antriebswelle einen mit der an der Motorwelle angebauten Kupplung antriebsverbundenen Wellenabschnitt aufweist, der zum Antrieb der hydrostatischen Antriebseinheit mit der Ankerplatte der Kupplung verbunden und zur Lagerung der mit der Ankerplatte der Kupplung für den Antrieb der Arbeitswelle verbundenen Zahnrades eines Vorgeleges ausgebildet ist.

Zweckmässig ist der Kupplungsrotor der Kupplung für die Arbeitswelle mit dem Wellenabschnitt antriebsverbunden.

Vorzugsweise bildet der Wellenabschnitt einen formschlüssig verbundenen Teil der Antriebswelle.

Nachfolgend wird die Erfindung unter Bezugnahme auf den zitierten resp. den zitierenden Stand der Technik und die Zeichnung, auf die bezüglich aller in der Beschreibung nicht näher erwähnten Einzelheiten verwiesen wird, anhand von zwei Ausführungsbeispielen erläutert In der Zeichnung zeigen:
- Fig. 1: eine räumliche Darstellung einer zum Stand der Technik gehörende Arbeitsmaschine der Bezeichnung SWISS der Rapid Technic AG resp. der vorliegend beschriebenen Art,

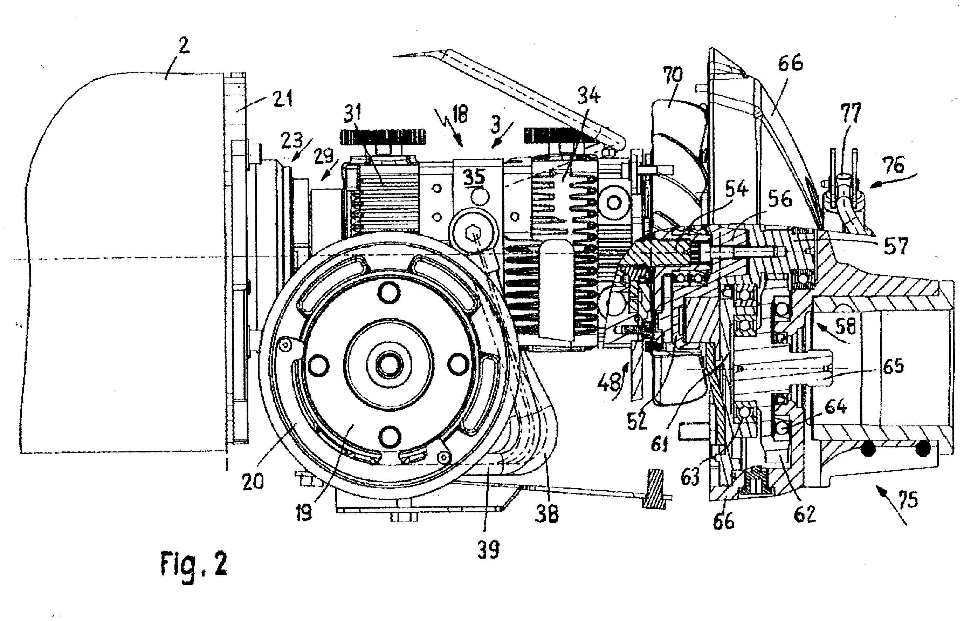

- Fig. 2: eine teilweise Seitenansicht/Längsschnitt-Darstellung eines erfindungsgemässen Arbeitsstrangs, insbesondere die Ausbildung des Antriebs der Arbeitswelle einer Arbeitsmaschine,

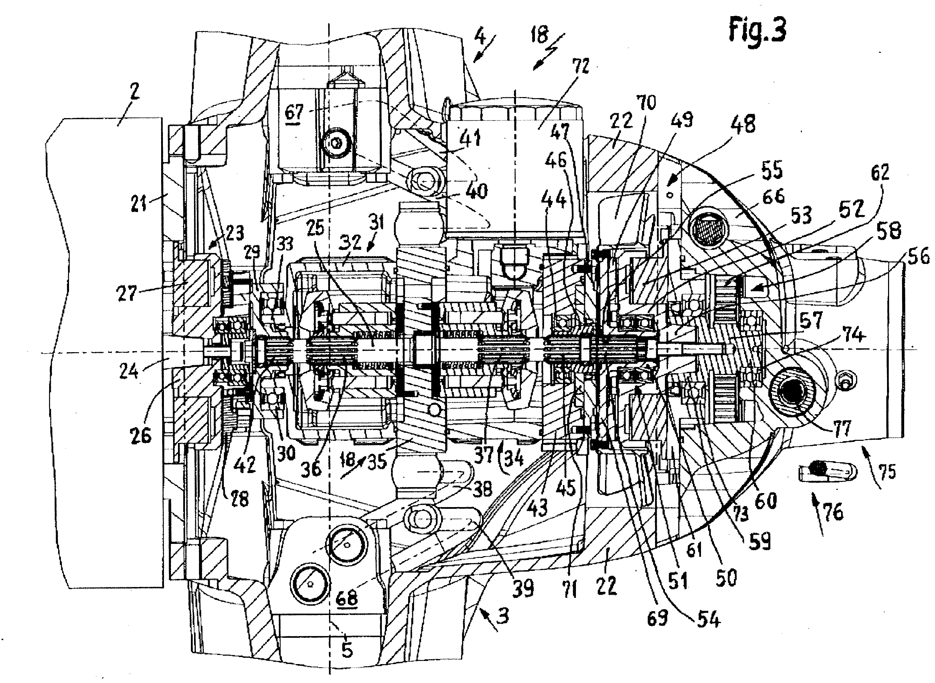

- Fig.3: einen Horizontalschnitt entlang des Arbeitsstranges der in Fig. 2 teilweise gezeigten Arbeitsmaschine,
- Fig. 4: eine einfache schematische Darstellung des in den Fig. 2 bis 4 dargestellten Antriebsstranges der Arbeitsmaschine,
- Fig. 5: eine weitere einfache schematische Darstellung einer alternativen Ausführung eines Antriebsstrangs der Arbeitsmaschine und
- Fig. 6: eine teilweise Seitenansicht/Längsschnitt-Darstellung zu dem in Fig. 6 gezeigten Schema eines alternativen Antriebsstrangs der Arbeitsmaschine.

Fig. 1 veranschaulicht eine moderne selbstfahrende, einachsige Arbeitsmaschine 1 für das Betreiben und Fortbewegen von front- und/oder heckseitig anbaubaren, zuschaltbaren Arbeitsgeräten (nicht ersichtlich), die eine mit einem Antriebsmotor, vorzugsweise einem Verbrennungsmotor 2 antriebsverbundene Antriebseinheit 3 aufweist, mit der die an einer mit einem Fahrgestell 4 verbundenen Fahrachse 5 befestigten Räder 6, 7 und die anbaubaren Arbeitsgeräte -bei Bedarf mechanisch oder hydrostatisch angetrieben werden. Die Arbeitsmaschine 1 kann durch Schalten sowohl in Richtung F vorwärts als auch in die Gegenrichtung F' fahrbar fortbewegt werden. Zur begleiteten Führung und Steuerung der Arbeitsmaschine 1 durch einen Maschinenführer sind mit dem Fahrgestell 4 fest verbundene Führungsorgane 8, 9 vorgesehen, an denen einer Steuerventileinheit 10 zugeordnete Betätigungsorgane einer hydrostatischen Antriebseinheit 3 befestigt sind. Die Führungsorgane 8, 9 sind durch holmartige Lenker ausgebildet, die jeweils an den freien Enden Hand-/Bedienungsgriffe 11, 12 zur manuellen Führung, Lenkung und Betätigung der Arbeitsmaschine 1 aufweisen. Das Lenken der Arbeitsmaschine 1 im Gelände erfolgt vorwiegend mittels hydrostatischer Vorrichtung über die Steuereinheit 10, die Antriebseinheit 3 sowie den Rädern 6, 7 zugeordnete, von einer Pumpe versorgten Hydromotoren. An der Vorderseite weist die Arbeitsmaschine 1 eine zu- und abschaltbare, geschützte Arbeits-/Zapfwelle 13 zur Koppelung mit den Antrieben anbaubarer Arbeitsgeräte auf. Der von der Bedienungsperson aus betrachtet linke Bedienungsgriff 12 des Führungsorgans 9 ist mit einem mittels linker Hand zu betätigenden Bremshebel 14 einer auf die Räder 6, 7 resp. die Fahrachse 5 reagierenden Feststellbremse und einem Totmannhebel 15 einer Totmann-Schaltvorrichtung 16 versehen. Beim Erfassen des Bedienungsgriffs 12 am befestigten Handgriff 17 wird der Totmannhebel 15 erfasst und an den Handgriff 17 angelegt. Nun kann der Antriebsmotor 2 resp. die hydrostatische Antriebseinheit 3 der Arbeitsmaschine 1 gestartet und in Betrieb gehalten werden, solang der Totmannhebel 15 am Handgriff 17 ansteht bzw. erfasst bleibt. Sobald die Hand vom Handgriff 17 resp. Totmannhebel 15 gelöst wird, wird der Antriebsmotor 2 ab- resp. die hydrostatische Antriebseinheit 3 wirkungslos geschaltet. Nach neuen Erkenntnissen ist es zweckmässig resp. vorgeschrieben, dass der Antriebsmotor 2 nach Einsetzen der Totmann-Schaltvorrichtung mit der eingestellten Drehzahl weiterdreht und die hydrostatische Antriebseinheit 3 auf wirkungslos schaltet, damit bei einem Festsitzen der Arbeitsmaschine diese durch geeignete Manipulationen wieder freigesetzt werden kann und der Antriebsmotor nicht erneut gestartet werden muss (siehe in EP 2 491 777 A1).
Die Fig. 2 und 3 zeigen einen Antriebsstrang 18 einer selbstfahrenden, einachsigen und auch manuell lenkbaren oder fern steuerbaren Arbeitsmaschine 1. Der Antriebsstrang 18 ist auf dem aus einer Fahrachse 5 mit zwei Rädern 6, 7 gebildeten Fahrgestell 4 abgestützt. Von den Rädern 6, 7 sind in Fig. 2 lediglich die eine Radnabe 19 eines Rades festgehalten, an der jeweils eine bereifte Felge festgeschraubt wird, und eine Rückhaltevorrichtung 20 einer Bremsbacke erkennbar ist.

Weiterhin ist in Fig. 2 eine Befestigungsplatte 21 für den Antriebs-, Verbrennungs- oder Elektromotor 2 eines das Fahrgestell 4 bildenden mehrteiligen Maschinengehäuses 22 ersichtlich, in dem die Komponenten des Antriebsstrangs 18 angeordnet sind, wobei der Antriebsmotor 2 an der mit dem Maschinengehäuse 22 bzw. dem Fahrgestell 4 verbundenen Befestigungsplatte 21 festgeschraubt ist. Nach der Fig. 3 ist eine betätigbare Kupplung 23, vorzugsweise eine elektromagnetisch betätigbare Kupplung 23 an der Motorwelle 24 des Antriebsmotors 2 angeordnet, die mit einer Antriebswelle. (Hauptwelle) 25 des Antriebsstrangs 18 in Antriebsverbindung bringbar ist.
Die beispielsweise zur elektromagnetischen Kraftübertragung betätigbare Kupplung 23 besteht aus einem an der Motorwelle 24 festgeschraubten Kupplungsrotor 26, in dem eine elektrisch ein- und ausschaltbare Spule 27 ortsfest angeordnet ist, die bei zugeführtem elektrischen Strom eine magnetische Anziehungskraft auf eine Ankerplatte 28 ausübt und eine Antriebsverbindung zur Arbeitswelle 13 herstellt Die durch elektromagnetische Kraft aus der Spule 27 antreibbare Ankerplatte 28 ist mit der im Maschinengehäuse 22 vorzugweise zentral gelagerten Antriebswelle 25 des Antriebsstrangs 18 für den Antrieb der hydrostatischen Antriebseinheit 3 und die Arbeitswelle 13 mit diesen antriebsverbunden, wobei der Ankerplatte 28 durch einen zugeordneten Kupplungsring 29 ausgebildet und mit der Antriebswelle 25 keilförmig resp. formschlüssig verbunden ist. Der mit einer Keilnabe ausgebildete Kupplungsring 29 ist mit einem Keilwellenabschnitt 42 der Antriebswelle 25 antriebsverbunden und weist konzentrisch zur Achse der Antriebswelle 25 ein inneres Wälzlager 30 auf, das auf einem dem an dem Gehäuse 32 der Hydraulikpumpe 31 befestigten Lagerzapfen 33 ruht, wobei das Gehäuse 32 der Hydraulikpumpe 31 in dem Gehäuseteil 32 befestigt ist. Gemäss Fig. 3 ist jedem angetriebenen Rad 6, 7 eine eigene Hydraulikpumpe 31, 34 zugeordnet, die von der Antriebswelle 25 gemeinsam angetrieben sind. Hierzu ist die Antriebswelle 25 im Bereich der durch einen Verteilerplatte 35 beabstandeten Hydraulikpumpen 31, 34 durch jeweils einen Keilwellenabschnitt 36, 37 ausgebildet, mit dem die in den Figuren vorkommenden Axialkolbenpumpen 31, 34 angetrieben sind.
Selbstverständlich könnte die hydrostatische Antriebseinheit 3 mit nur einer Hydraulikpumpe und einer entsprechenden Ventilsteuervorrichtung zur Regelung der Hydraulikmotoren der Rädern 6, 7 auskommen.
Über der zwischen den Axialkolbenpumpen 31, 34 angeordneten Verteilerplatte 35 wird den jedem Rad 6, 7 zugeordneten Hydraulikmotoren 67, 68 mittels den an der Verteilerplatte 35 angeschlossenen Leitungen 38 bis 41 der Hydraulikkreise Flüssigkeit (vorzugsweise Hydrauliköl) zu- und zurückgeführt. Die Flüssigkeitsmenge zu den Hydraulikmotoren 67, 68 resp. die Drehzahl der mit diesen verbundenen Räder 6, 7 wird von der Bedienungsperson durch Betätigungsorgane an den Führungsorganen 8, 9 der Arbeitsmaschine 1 über eine Steuereinheit elektrisch oder mechanisch eingestellt bzw. verstellt.
Ein in den Ölkreislauf eingebauter Ölfilter 72 ist an der Hydraulikpumpe 34 montiert.

An die von dem Antriebsmotor 2 entferntere Hydraulikpumpe 34 schliesst ein einer Füllpumpe zugehöriges Füllpumpengehäuse 43 an, in dem die Antriebswelle (Hauptwelle) 25 mittels Wälzlager 44 an einer auf einen Keilwellenabschnitt 45 der Antriebswelle 25 aufgeschobenen Lagerhülse 46 gelagert ist An dem Füllpumpengehäuse 43 ist ein Gehäusedeckel 47 festgeschraubt, in dem eine weitere auf die Lagerhülse 46 wirkende Dichtung ruht.
Zwischen Füllpumpengehäuse 43 und Gehäusedeckel 47 befindet sich in einem Hohlraum des Pumpengehäuses 43 ein Füllpumpenrotor 71, der für den Leckausgleich der Hydraulikpumpen vorgesehen und mit der Antriebswelle (Hauptwelle) 25 verbunden ist.
Auf dem Keilwellenabschnitt 54 sitzt ein eine Nabe 69 bildender Ring, an dessen Umfang ein Lüfterrad 70 zur Kühlung des Innenraums des Maschinengehäuses befestigt ist.

Der Keilwellenabschnitt 54 reicht in eine Keilnabe einer weiteren ein- und ausschaltbaren Kupplung 48, vorzugsweise eine elektromagnetisch funktionierende Kupplung. Die Ankerplatte 49 ist mit einem konzentrischen Lagerhals 50 ausgestattet, auf dem zwei Wälzlager 51 nebeneinander angeordnet sind, die den mit der Nabe 69 verbundenen Kupplungsrotor 52 aufnehmen. Innerhalb des Kupplungsrotors 52 ist eine elektrische Spule 53 ortsfest angeordnet, die bei zugeführtem elektrischen Strom eine magnetische Kraft auf den Kupplungsrotor 52 auslöst und eine Antriebsverbindung zur Arbeitswelle 13 schafft. Die Antriebswelle 25 des Antriebsstrangs 18 endet mit einem Keilwellenabschnitt 54 in der mit einer Keilnabe versehenen Bohrung der Ankerplatte 49 resp. oben beschriebenen Nabe 69. Der auf dem Lagerhals 50 der Ankerplatte 49 mittels Wälzlagern 51 drehbar abgestützte Kupptungsrotor 52 weist einen kegelig ausgebildeten Zapfen 56 auf, an dem ein Zahnritzel 57 eines Zahnradvorgeleges 58 zum Antrieb der Arbeitswelle 13 (Zapfwelle) aufgesteckt und festgeschraubt ist.
Eine den Zapfen 56 in der Achse der Antriebswelle 25 durchsetzende Schraube hält das Zahnritzel 57 an dem Kupplungsrotor 52 fest. Das Zahnritzel 57 ist beidseits der Verzahnung durch zylindrische Lagerstutzen 59, 60 ausgebildet, auf denen jeweils ein Rillenkugellager 73, 74 angeordnet ist, die in einem die elektrische Spule 53 festhaltenden Lagerschild/Deckel 61 des Zapfwellengehäuses bzw. Gehäuseteil 66 im Maschinengehäuse 22 angeordnet sind.
Ein gemäss den Fig. 2 und 3 unterhalb des Zahnritzels 57 angeordnetes und mit diesem kämmendes Zahnrad 62 ist einerseits im an dem Gehäuseteil 66 befestigten Lagerschild/Deckel 61 des Zapfwellengehäuses und andererseits mittels Wälzlagern 63, 64 in dem Gehäuseteil 66 gelagert, wobei an dem Zahnrad 62 ein Anschlusszapfen 65 der Arbeitswelle 13 befestigt ist.
Zum Schutz des Anschlusszapfens 65, der als Mehrfachkeilwelle ausgebildet ist, ist eine Schutzvorrichtung 75 an dem Gehäuseteil 66 des Maschinengehäuses 22 befestigt, in welche eine nicht sichtbare Gelenkwelle eines Arbeitsgerätes zur Koppelung mit dem Anschlusszapfen 65 einführbar ist.
Die Arretierung und Sicherung der Gelenkwelle an dem Anschlusszapfen 65 erfolgt mit einer in den Fig. 1 und 2 dargestellten Verriegelungsvorrichtung 76 durch einen Verriegelungsbolzen 77.

Die Ausführung des Arbeitsstrangs nach den Fig. 2 und 3 ist in einfacher schematischer Darstellung in Fig. 4 dargestellt, die den besonderen Antriebsstrang 18 vom Antriebsmotor 2 bis hin zur Arbeitswelle 13 offenbart, wo der/die zwischen Antriebsmotor 2 und Arbeitswelle 13 angeordnete/n Hydraulikpumpe/n 31, 34 der hydrostatischen Antriebseinheit 3 und der Arbeits-/Zapfwelle 13 jeweils eine von der anderen unabhängig schaltbare Kupplung 23, 48 vorgeschaltet ist.

Fig. 5 zeigt eine schematische Darstellung einer alternativen Ausführung eines Arbeitsstrangs einer Arbeitsmaschine nach der Art gemäss Fig. 1.

Fig. 6 vermittelt die alternative Ausführung eines Antriebsstrangs 18 gemäss schematischer Darstellung in Fig. 5. Am Anfang steht wiederum ein Antriebs- beispielsweise Verbrennungs- oder Elektromotor 2 einer Arbeitsmaschine, der mit einer an einem auf einem Fahrgestell 4 befestigten Maschinengehäuse 22 angeordneten Befestigungsplatte 21 verbunden ist. An der Befestigungsplatte 21 ist eine elektrische Spule 27 zur Erzeugung einer auf einen Kupplungsrotor 26 einer elektromagnetischen Kupplung 23 übertragbaren magnetischen Anziehungskraft befestigt, wobei der Kupplungsrotor 26 mit der Motorwelle 24 des Antriebsmotors 2 antriebsverbunden ist Hierzu ist die Motorwelle 24 mit einem kegelstumpfförmigen Wellenende ausgebildet, auf welches der Kupplungsrotor 26 durch eine kegelige Bohrung mittels Schraube 78 aufgespannt ist.

An der von dem Antriebsmotor 2 abgewandten Seite des Kupplungsrotors 26 lagert die an einer rotierenden Scheibe 79 befestigte Ankerplatte 28 mittels Wälzlagern 80 auf einem Lagerstutzen 81, der durch die Schraube 78 an dem Kupplungsrotor 26 befestigt ist. Die Antriebswelle 25 des Antriebsstrangs 18 ist als Wellenabschnitt 82 ausgebildet, der Teil der Antriebswelle 25 bildet und die Motorwelle 24 mit der hydrostatischen Antriebseinheit 3 einerseits verbindet und dem Antrieb der Arbeitswelle 13 andererseits, insbesondere dieser vorgeschalteten elektromagnetischen Kupplung 48 zugeordnet ist.
Zu diesem Zweck besitzt das dem Antriebsmotor zugewandte Ende des Wellenabschnitts 82 eine Antriebsplatte 83, die mit der Scheibe 79 fest verbunden ist. An dem Wellenabschnitt 82 sitzt der Kupplungsrotor 52 der Kupplung 48, der eine elektrische Spule teilweise umgibt. Die Spule 53 ist an einem die Kupplung 23 in axialer Richtung überstehenden Support 84 befestigt, der an der vom Antriebsmotor 2 abgekehrten Seite der Befestigungsplatte 21 festgeschraubt ist Die Antriebsverbindung von Wellenabschnitt 82 und Kupplungsrotor erfolgt durch eine Keilverbindung 85. Die Ankerplatte 49 der Kupplung 48 ist an einem als Hohlwelle an dem Wellenabschnitt 82 umlaufenden Tragring 86 befestigt, der auf Wälzlagern 87 an dem Wellenabschnitt 82 gelagert ist und am Umfang eine Verzahnung 88 eines Zahnrades 89 aufweist.
Das Zahnrad 89/Tragring 86 ist mit der Arbeitswelle 13 durch ein weiteres Zahnrad 90 antriebsverbunden, das sich an einem Ende eines längeren Anschlusszapfens 65 der Arbeitswelle 13 befindet, die vorzugsweise im Maschinengehäuse 22 gelagert ist.
Der Teil der Antriebswelle 13 bildende Wellenabschnitt 82 des Arbeitsstrangs 18 ist durch eine Vorrichtung aus zusammengesteckter Keilnabe 91 und Keilwelle 92 mit der hydrostatischen Antriebseinheit 3 verbunden, die bei dem Ausführungsbeispiel nach Fig. 6 wiederum von einer Einheit aus zwei Hydraulikpumpen 31 und 34 gebildet wird.

## Patentansprüche

1. Selbstfahrende, vorzugsweise einachsige, manuell lenk- und steuerbare Arbeitsmaschine (1) für das Fortbewegen und Betreiben angebauter Arbeitsgeräte oder angehängter Fahrzeuge, mit einem auf einem Fahrgestell (4) aufgebauten Antriebsmotor (2), der mit einer zur Fortbewegung der Arbeitsmaschine (1) bestimmten hydrostatischen Antriebseinheit (3) verbunden ist, die wenigstens eine mit dem Antriebsmotor (2) kuppelbare und steuerbare Hydraulikpumpe (31, 34) und mit dieser leitungsverbundene, an einer quer zur Fortbewegungsrichtung sich erstreckenden Fahrachse (5) jeweils endseitig befestigten Rädern (6, 7) zugeordnete Hydraulikmotoren aufweist, und der (2) zum Antrieb eines frontseitig an dem Fahrgestell (4) angebauten Arbeitsgerätes mit einer zuschaltbaren Arbeitswelle (13) ausgebildet ist, **dadurch gekennzeichnet, dass** der in **einem** den Antriebsmotor (2), die hydrostatische Antriebseinheit (3) und die Arbeitswelle (13) **durch eine Antriebswelle (25)** verbindenden Antriebsstrang (18) angeordneten, wenigstens einen Hydraulikpumpe (31, 34) **der hydrostatischen Antriebseinheit (3)** und der Arbeitswelle (13) jeweils eine von der anderen unabhängig ein- und ausschaltbare Kupplung (23, 48) vorgeschaltet ist.

2. Arbeitsmaschine nach Anspruch 1, **dadurch gekennzeichnet, dass** die Hydraulikpumpe (31, 34) zwischen den vorgeschalteten Kupplungen (23, 48) angeordnet ist.

3. Arbeitsmaschine nach Anspruch 1, **dadurch gekennzeichnet, dass** die vorgeschalteten Kupplungen (23, 48) vor der Hydraulikpumpe (31, 34) an der Antriebswelle (25) angeordnet bzw. mit dieser antriebsverbindbar sind.

4. Arbeitsmaschine nach Anspruch 3, **dadurch gekennzeichnet, dass** der der Arbeitswelle (13) zugeordneten Kupplung (48) ein Vorgelege (58) nachgeschaltet ist.

5. Arbeitsmaschine nach Anspruch 4, mit einem aus einem treibenden Zahnrad (86) und einem getriebenen Zahnrad (90) gebildeten Vorgelege, **dadurch gekennzeichnet, dass** das treibende Zahnrad (86) als Hohlwelle an der Antriebswelle (25) gelagert und mit der Ankerplatte (49) der der Arbeitswelle (13) zugeordneten Kupplung (48) antriebsverbunden ist.

6. Arbeitsmaschine nach Anspruch 4 oder 5, **dadurch gekennzeichnet, dass** die für die Arbeitswelle **(13)** bestimmte Kupplung **(48)** zwischen der für die hydrostatische Antriebseinheit (13) bestimmten Kupplung **(23)** und der Hydraulikpumpe **(31, 34)** an der Antriebswelle **(25)** angeordnet ist.

7. Arbeitsmaschine nach einem der Ansprüche 1 bis 6, **dadurch gekennzeichnet, dass** die hydrostatische Antriebseinheit **(3)** jeweils jedem Rad **(6, 7)** zugeordnete Hydraulikpumpen **(31, 34)** aufweist.

8. Arbeitsmaschine nach einem der Ansprüche 1 bis 7, **dadurch gekennzeichnet, dass** der Antriebsmotor (2) an einer mit dem Fahrgestell (4) verbundenen Befestigungsplatte (21) eines Maschinengehäuses (22) festgeschraubt ist und die Motorwelle (24) durch die Kupplung (23) mit einer im Maschinengehäuse (22) gelagerten Antriebswelle (25) des Antriebsstrangs (18) antriebsverbunden ist.

9. Arbeitsmaschine nach Anspruch 8, **dadurch gekennzeichnet, dass** die entlang der Antriebswelle (25) angeordnete/n Hydraulikpumpe/n (31, 34) der hydrostatischen Antriebseinheit (3) und die Kupplung (48) der Arbeitswelle (13) durch Keilwellenverbindungen (36, 37, 42, 54) mit der Antriebswelle (25) antriebsverbunden sind.

10. Arbeitsmaschinenach Anspruch 9, **dadurch gekennzeichnet, dass** das vom Antriebsmotor (2) abgewandte Ende der Antriebswelle (25) an einem in dem Maschinengehäuse (22) befestigten Lagerschild (61) aufgenommen ist.

11. Arbeitsmaschine nach Anspruch 10, **dadurch gekennzeichnet, dass** eine mit der Ankerplatte (49) der Kupplung (48) verbundene Nabe (69) einen konzentrisch zur Antriebswelle (25) angeordneten Lagerhals (50) aufweist, auf dem der mit einem Zahnritzel (57) des Vorgeleges verbundener Kupplungsrotor (52) gelagert ist.

12. Arbeitsmaschine nach Anspruch 10, **dadurch gekennzeichnet, dass** der Lagerschild (61) in einem an dem Maschinengehäuse (22) abnehmbar befestigten Gehäuseteil (66) angeordnet ist.

13. Arbeitsmaschine nach Anspruch 3, **dadurch gekennzeichnet, dass** die Antriebswelle (25) einen mit der an der Motorwelle (24) angebauten Kupplung (23) antriebsverbundenen Wellenabschnitt (82) aufweist, der zum Antrieb der hydrostatischen Antriebeinheit (3) mit der Ankerplatte (28) der Kupplung (23) verbunden und zur Lagerung der mit der Ankerplatte (49) der Kupplung (48) für den Antrieb der Arbeitswelle (13) verbundenen Zahnrades (86) eines Vorgeleges ausgebildet ist.

14. Arbeitsmaschine nach Anspruch 13, **dadurch gekennzeichnet, dass** der Kupplungsrotor (52) der Kupplung (48) mit dem Wellenabschnitt (82) antriebsverbunden ist.

15. Arbeitsmaschine nach Anspruch 14, **dadurch gekennzeichnet, dass** der Wellenabschnitt (82) formschlüssig verbundener Teil der Antriebswelle (25) bildet.

## Claims

1. Self-propelled, preferably single-axle, manually steerable and controllable working machine (1) for moving and driving mounted implements or attached vehicles, comprising a drive motor (2) mounted on a chassis (4) and connected to a hydrostatic drive unit (3) intended for moving the working machine (1), said drive unit having at least one controllable hydraulic pump (31, 34) that can be coupled to the drive motor (2) and hydraulic motors line-connected thereto associated with wheels (6, 7) secured to either end of an axle (5) extending transversely to the direction of movement, and said drive motor (2) being designed with an auxiliary output shaft (13) for driving an implement mounted at the front of the chassis (4), **characterised in that** respective clutches (23, 48) that can be engaged and disengaged independently of one another are disposed upstream of the at least one hydraulic pump (31, 34) of the hydrostatic drive unit (3) arranged in a driveline (18) connecting the drive motor (2), the hydrostatic drive unit (3) and the output shaft (13) by means of a drive shaft (25) and of the output shaft (13).

2. Working machine according to claim 1, **characterised in that** the hydraulic pump (31, 34) is arranged between the upstream clutches (23, 48).

3. Working machine according to claim 1, **characterised in that** the upstream clutches (23, 48) are arranged in front of the hydraulic pump (31, 34) on the drive shaft (25) or are operatively connected thereto.

4. Working machine according to claim 3, **characterised in that** an intermediate gear (58) is disposed downstream of the clutch (48) associated with the output shaft (13).

5. Working machine according to claim 4, comprising an intermediate gear formed of a driving gear (86) and a driven gear (90), **characterised in that** the driving gear (86) is mounted on the driving shaft (25) as a hollow shaft and is operatively connected to the armature plate (49) of the clutch (48) associated with the output shaft (13).

6. Working machine according to claim 4 or claim 5, **characterised in that** the clutch (48) intended for the output shaft (13) is arranged on the drive shaft (25) between the clutch (23) intended for the hydrostatic drive unit (3) and the hydraulic pump (31,34).

7. Working machine according to one of claims 1 to 6, **characterised in that** the hydrostatic drive unit (3) has respective hydraulic pumps (31, 34) each associated with one wheel (6, 7).

8. Working machine according to one of claims 1 to 7, **characterised in that** the drive motor (2) is screwed on to a mounting plate (21) of a machine housing (22) connected to the chassis (4) and the motor shaft (24) is operatively connected by means of the clutch (23) to a drive shaft (25) of the driveline (18) mounted in the machine housing (22).

9. Working machine according to claim 8, **characterised in that** the hydraulic pump/s (31, 34) of the hydrostatic drive unit (3) arranged along the drive shaft (25) and the clutch (48) of the output shaft (13) are operatively connected to the drive shaft (25) by means of splined connections (36, 37, 42, 54).

10. Working machine according to claim 9, **characterised in that** the end of the drive shaft (25) remote from the drive motor (2) is mounted on an end plate (61) secured in the machine housing (22).

11. Working machine according to claim 10, **characterised in that** a hub (69) connected to the armature plate (49) of the clutch (48) has a bearing neck (50) arranged concentrically with the drive shaft (25) and on which the clutch rotor (52) connected to a pinion (57) of the intermediate gear is mounted.

12. Working machine according to claim 10, **characterised in that** the bearing plate (61) is arranged in a housing part (66) removably secured to the machine housing (22).

13. Working machine according to claim 3, **characterised in that** the drive shaft (25) has a shaft portion (82) operatively connected to the clutch (23) mounted on the motor shaft (24), said shaft portion being connected to the armature plate (28) of the clutch (23) for driving the hydrostatic drive unit (3) and being designed to support the gear (86) of an intermediate gear connected to the armature plate (49) of the clutch (48) for the drive of the output shaft (13).

14. Working machine according to claim 13, **characterised in that** the clutch rotor (52) of the clutch (48) is operatively connected to the shaft portion (82).

15. Working machine according to claim 14, **characterised in that** the shaft portion (82) forms a positively connected part of the drive shaft (25).

## Revendications

1. Machine de travail automotrice (1), de préférence à un essieu, dirigeable et commandable manuellement, pour le déplacement et le fonctionnement d'appareils de travail montés ou de véhicules remorqués, comprenant un moteur d'entraînement (2) monté sur un châssis de roulement (4), qui est relié à une unité d'entraînement hydrostatique (3) prévue pour le déplacement de la machine de travail (1), laquelle présente au moins une pompe hydraulique (31, 34) commandable et pouvant être accouplée au moteur d'entraînement (2) et des moteurs hydrauliques raccordés à celle-ci par des conduites, associés à des roues (6, 7) fixées chacune du côté de l'extrémité à un essieu directeur (5) s'étendant transversalement à la direction de déplacement, et lequel moteur d'entraînement (2) est réalisé pour entraîner un appareil de travail monté du côté avant sur le châssis de conduite (4), avec un arbre de travail commutable (13), **caractérisée en ce qu'à** chaque fois un embrayage embrayable et débrayable (23, 48) indépendamment de l'autre est monté en amont de l'au moins une pompe hydraulique (31, 34) de l'unité d'entraînement hydrostatique (3) et de l'arbre de travail (13) disposée dans une chaîne cinématique (18) reliant le moteur d'entraînement (2), l'unité d'entraînement hydrostatique (3) et l'arbre de travail (13) par un arbre d'entraînement (25).

2. Machine de travail selon la revendication 1, **caractérisée en ce que** la pompe hydraulique (31, 34) est disposée entre les embrayages montés en amont (23, 48).

3. Machine de travail selon la revendication 1, **caractérisée en ce que** les embrayages montés en amont (23, 48) sont disposés avant la pompe hydraulique (31, 34) au niveau de l'arbre d'entraînement (25) ou peuvent être reliés par entraînement à celui-ci.

4. Machine de travail selon la revendication 3, **caractérisée en ce qu'**un réducteur (58) est monté en aval de l'embrayage (48) associé à l'arbre de travail (13).

5. Machine de travail selon la revendication 4, comprenant un réducteur formé d'une roue dentée d'entraînement (86) et d'une roue dentée menée (90), **caractérisée en ce que** la roue dentée d'entraînement (86) est supportée en tant qu'arbre creux sur l'arbre d'entraînement (25) et est reliée par entraînement à la plaque d'armature (49) de l'embrayage (48) associé à l'arbre de travail (13).

6. Machine de travail selon la revendication 4 ou 5, **caractérisée en ce que** l'embrayage (48) prévu pour l'arbre de travail (13) est disposé au niveau de l'arbre d'entraînement (25) entre l'embrayage (23) prévu pour l'unité d'entraînement hydrostatique (13) et la pompe hydraulique (31, 34).

7. Machine de travail selon l'une quelconque des revendications 1 à 6, **caractérisée en ce que** l'unité d'entraînement hydrostatique (3) présente à chaque fois des pompes hydrauliques (31, 34) associées à chaque roue (6, 7).

8. Machine de travail selon l'une quelconque des revendications 1 à 7, **caractérisée en ce que** le moteur d'entraînement (2) est vissé fixement à une plaque de fixation (21) d'un boîtier de machine (22) reliée au châssis de conduite (4), et l'arbre de moteur (24) est relié par entraînement par l'embrayage (23) à un arbre d'entraînement (25) de la chaîne cinématique (18) supporté dans le boîtier de machine (22).

9. Machine de travail selon la revendication 8, **caractérisée en ce que** la ou les pompes hydrauliques (31, 34) de l'unité d'entraînement hydrostatique (3), disposées le long de l'arbre d'entraînement (25), et l'embrayage (48) de l'arbre de travail (13) sont reliés par entraînement par des liaisons d'arbres cannelés (36, 37, 42, 54) à l'arbre d'entraînement (25).

10. Machine de travail selon la revendication 9, **caractérisée en ce que** l'extrémité de l'arbre d'entraînement (25) opposée au moteur d'entraînement (2) est logée au niveau d'un flasque de palier (61) fixé dans le boîtier de machine (22).

11. Machine de travail selon la revendication 10, **caractérisée en ce qu'**un moyeu (69) relié à la plaque d'armature (49) de l'embrayage (48) présente un collet de palier (50) disposé concentriquement par rapport à l'arbre d'entraînement (25), sur lequel est supporté le rotor d'embrayage (52) relié à un pignon denté (57) du réducteur.

12. Machine de travail selon la revendication 10, **caractérisée en ce que** le flasque de palier (61) est disposé dans une partie de boîtier (66) fixée de manière amovible au boîtier de machine (22).

13. Machine de travail selon la revendication 3, **caractérisée en ce que** l'arbre d'entraînement (25) présente une portion d'arbre (82) reliée par entraînement à l'embrayage (23) monté sur l'arbre de moteur (24), qui est reliée, pour l'entraînement de l'unité d'entraînement hydrostatique (3), à la plaque d'armature (28) de l'embrayage (23) et qui est réalisée pour le support sur palier de la roue dentée (86) d'un réducteur reliée à la plaque d'armature (49) de l'embrayage (48) pour l'entraînement de l'arbre de travail (13).

14. Machine de travail selon la revendication 13, **caractérisée en ce que** le rotor d'embrayage (52) de l'embrayage (48) est relié par entraînement à la portion d'arbre (82).

15. Machine de travail selon la revendication 14, **caractérisée en ce que** la portion d'arbre (82) forme une partie de l'arbre d'entraînement (25) reliée par engagement par correspondance de formes.
